# EUROPÄISCHE PATENTANMELDUNG

(11) **EP 1 033 907 A2**
(43) Veröffentlichungstag der Anmeldung: **06.09.2000**
(21) Anmeldenummer: 00103513.8
(22) Anmeldetag: 18.02.2000
(51) Int. Cl.: H05B 41/288, H05B 41/38

(54) **Schaltungsanordnung zum Betrieb mindestens einer Hochdruckentladungslampe und Betriebsverfahren**

(30) Priorität: 04.03.1999 DE 19909530
(71) Anmelder: Patent-Treuhand-Gesellschaft für elektrische Glühlampen mbH, 81543 München (DE)
(72) Erfinder: Rupp, Arnulf, 81379 München (DE); Thiel, Gerwin, D-82223 Eichenau (DE); Hirschmann,Günther, 81735 München (DE)

(57) **Zusammenfassung**

Die Erfindung betrifft eine Schaltungsanordnung zum Betrieb mindestens einer Hochdruckentladungslampe mit einer hochfrequenten Wechselspannung, wobei die Schaltungsanordnung einen Spannungswandler (W) mit einem Wechselspannungsausgang (j10, j11), einen an den Wechselspannungsausgang (j10, j11) angeschlossenen Lastkreis, der zumindest eine Lampendrossel (L1), einen Koppelkondensator (C1) und Anschlüsse (j12, j13) für mindestens eine Hochdruckentladungslampe (LP) enthält, und eine Zündvorrichtung (Z) mit einer Hochspannungsquelle sowie mit einem Hochvolt-Gleichspannungsausgang (j14, j15) zum Zünden einer Gasentladung in der mindestens einen Hochdruckentladungslampe (LP), aufweist. Der Koppelkondensator (C1) ist erfindungsgemäß über einen Ladewiderstand (R1) mit dem Hochvolt-Gleichspannungsausgang (j14, j15) verbunden.

## Beschreibung

Die Erfindung betrifft eine Schaltungsanordnung zum Betrieb mindestens einer Hochdruckentladungslampe gemäß dem Oberbegriff des Patentanspruchs 1 und ein Betriebsverfahren für eine Hochdruckentladungslampe.

### I. Stand der Technik

Eine derartige Schaltungsanordnung ist beispielsweise in der internationalen Patentanmeldung mit der Veröffentlichungsnummer WO 98/18297 offenbart. Diese Offenlegungsschrift beschreibt eine Schaltungsanordnung zum Hochfrequenzbetrieb einer Hochdruckentladungslampe, das heißt, zum Betrieb der Hochdruckentladungslampe an einer Wechselspannung mit einer Frequenz oberhalb von 200 kHz und vorzugsweise sogar oberhalb von 500 kHz. Die Schaltungsanordnung weist einen Spannungswandler auf, der an seinem Ausgang eine hochfrequente Wechselspannung erzeugt. Der Ausgang dieses Spannungswandlers wird von den beiden Sekundärwicklungen eines Transformators gebildet. Die erste Sekundärwicklung ist in einen als Serienresonanzkreis ausgebildeten, mit den Lampenanschlüssen versehenen Lastkreis geschaltet, während die zweite Sekundärwicklung an den Spannungseingang einer Zündvorrichtung angeschlossen ist. Bei der Zündvorrichtung handelt es sich um eine Impulszündvorrichtung, die die Hochdruckentladungslampe mittels einer Zündhilfselektrode während der Zündphase mit unipolaren Hochspannungsimpulsen beaufschlagt. Bei einem Lampenbetrieb mit derartig hohen Wechselspannungsfrequenzen ist es schwierig, die erforderliche Zündspannung für die Hochdruckentladungslampe mit Hilfe eines Tesla-Transformators zu erzeugen, da die Sekundärwicklungen des Transformators bei so hohen Frequenzen - wegen ihres sonst zu hohen Innenwiderstandes und der daraus resultierenden zu geringen Leistungsübertragung - nur eine kleine Induktivität besitzen dürfen.

### II. Darstellung der Erfindung

Es ist die Aufgabe der Erfindung, eine Schaltungsanordnung zum Betrieb mindestens einer Hochdruckentladungslampe mit einer hochfrequenten Wechselspannung bereitzustellen, die eine verbesserte Zündvorrichtung zum Zünden einer Gasentladung in der mindestens einen Hochdruckentladungslampe aufweist, und ein verbessertes Betriebs- und Zündverfahren für eine mit einer hochfrequenten Wechselspannung gespeisten Hochdruckentladungslampe anzugeben.

Diese Aufgabe wird erfindungsgemäß durch die kennzeichnenden Merkmale des Patentanspruchs 1 gelöst. Besonders vorteilhafte Ausführungen der Erfindung sind in den Unteransprüchen beschrieben.

Die erfindungsgemäße Schaltungsanordnung weist einen Spannungswandler zur Erzeugung einer hochfrequenten Wechselanspannung an seinem Wechselspannungsausgang, einen an den Wechselspannungsausgang angeschlossenen Lastkreis, der zumindest eine Lampendrossel, einen Koppelkondensator sowie Anschlüsse für mindestens eine Hochdruckentladungslampe besitzt, und eine Zündvorrichtung zum Zünden einer Gasentladung in der mindestens einen Hochdruckentladungslampe auf, wobei die Zündvorrichtung mit einer Hochspannungsquelle und einem Hochvolt-Gleichspannungsausgang versehen ist. Der Koppelkondensator ist über einen Ladewiderstand mit dem Hochvolt-Gleichspannungsausgang verbunden. Durch diese Maßnahme wird der Koppelkondensator während der Zündphase mit der von der Zündvorrichtung generierten Hochvolt-Gleichspannung aufgeladen und dient während der Zündphase als Spannungsquelle für den Lastkreis und insbesondere für die mindestens eine Hochdruckentladungslampe. Nach erfolgter Zündung der Gasentladung in der mindestens einen Hochdruckentladungslampe wird der Koppelkondensator über die elektrisch leitfähige Entladungsstrecke in der mindestens einen Hochdruckentladungslampe entladen. Der über die mindestens eine Hochdruckentladungslampe fließende Entladestrom des Kopplungskondensators trägt wesentlich zur Entstehung und Stabilisierung des Entladungsbogens in der mindestens einen Hochdruckentladungslampe bei. Insbesondere verkürzt der durch die mindestens eine Hochdruckentladungslampe fließende Entladestrom des Kopplungskondensators die Übergangszeit von der unerwünschten, die Lampenelektroden schädigenden Glimmentladung zur Bogenentladung.

Die Hochspannungsquelle der Zündvorrichtung ist vorteilhafterweise als eine Kaskadenschaltung zur Spannungsvervielfachung der Ausgangsspannung des Spannungswandlers oder als eine induktiv an die Lampendrossel gekoppelte Sekundärwicklung eventuell mit nachgeschalteter Kaskadenschaltung zur Spannungsvervielfachung ausgebildet. Um eine Zerstörung des Spannungswandlers durch zu hohe Zündspannungen zu verhindern, ist vorteilhafterweise parallel zum Wechselspannungsausgang des Spannungswandlers ein spannungsbegrenzendes Bauteil geschaltet. Als spannungsbegrenzende Bauteile werden, weil sie mit hohen elektrischen Leistungen belastbar sind, vorteilhafterweise bidirektionale Dioden, beispielsweise Transildioden, oder Varistoren verwendet.

Vorteilhafterweise weist der Lastkreis des Spannungswandlers zusätzlich einen Resonanzkondensator auf, der mit der Lampendrossel einen Serienresonanzkreis bildet. Dadurch kann zusätzlich auch die Methode der Resonanzüberhöhung zur Bereitstellung der Entladungsbogen-Übernahme-Energie und zur Erzeugung der Betriebsspannung für die mindestens eine Hochdruckentladungslampe genutzt werden. Bei den besonders bevorzugten Ausführungsbeispielen ist der Resonanzkondensator parallel zu der aus dem Koppelkondensator und der mindestens einen Hochdruckentladungslampe bestehenden Serienschaltung geschaltet. Dadurch wird die Zündspannung für die mindestens eine Hochdruckentladungslampe aus der additiven Überlagerung der am Koppelkondensator anliegenden Hochvolt-Gleichspannung und der am Resonanzkondensator anliegenden resonanzüberhöhten hochfrequenten Wechselspannung des Spannungswandlers gebildet.

Der Spannungswandler ist vorteilhafterweise als Eintaktwandler oder als Gegentaktwandler, beispielsweise als Push-Pull-Wechselrichter, ausgeführt. Diese Spannungswandler sind besonders geeignet, um eine vergleichsweise geringe Gleichspannung von beispielsweise 12 V oder 24 V, die in Kraftfahrzeugen als üblich ist, in eine hochfrequente Wechselspannung mit einer Amplitude von ungefähr 500 V und einer Frequenz von mehr als 500 kHz umzuwandeln.

### III. Beschreibung der bevorzugten Ausführungsbeispiele

Nachstehend wird die Erfindung anhand eines bevorzugten Ausführungsbeispiels näher erläutert. Es zeigen:
- Figur 1: eine schematische Darstellung des ersten Ausführungsbeispiels der erfindungsgemäßen Schaltungsanordnung
- Figur 2: eine schematische Darstellung des zweiten Ausführungsbeispiels der erfindungsgemäßen Schaltungsanordnung mit einem als Serienresonanzkreis ausgebildeten Lastkreis
- Figur 3: die Schaltungsanordnung gemäß Figur 1 oder 2 mit einer Zündvorrichtung, die eine Sekundärwicklung über der Lampendrossel aufweist, in schematischer Darstellung
- Figur 4: die Schaltungsanordnung gemäß Figur 1 oder 2 mit einer Zündvorrichtung, die eine Kaskadenschaltung zur Spannungsvervielfachung aufweist, in schematischer Darstellung
- Figur 5: die Schaltungsanordnung gemäß Figur 2 mit einem als resonant arbeitenden Eintaktwandler ausgebildeten Spannungswandler in schematischer Darstellung

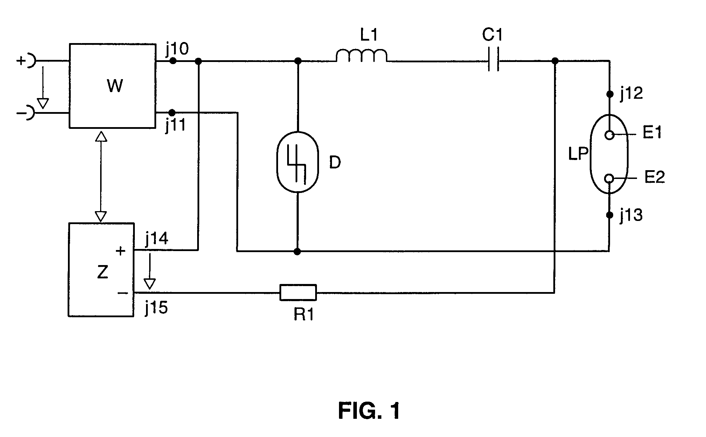

Die Figur 1 zeigt ein Blockschaltbild der erfindungsgemäßen Schaltungsanordnung. Sie besitzt einen Spannungswandler W, der von einer Spannungsquelle gespeist wird und an seinem Wechselspannungsausgang j10, j11 eine hochfrequente Wechselspannung zum Hochfrequenzbetrieb einer Hochdruckentladungslampe LP bereitstellt. An den Wechselspannungsausgang j10, j11 des Spannungswandlers W ist ein Lastkreis angeschlossen, der eine Lampendrossel L1, einen Koppelkondensator C1, zwei Anschlüsse j12, j13 für eine Hochdruckentladungslampe LP und eine bidirektionale Diodenschaltung D, die beispielsweise aus zwei in Serie geschalteten, gegensinnig gepolten Zenerdioden oder aus einer Transildiode D besteht, aufweist. Bei angeschlossener Hochdruckentladungslampe sind die beiden Anschlüsse j12, j13 jeweils mit einer Lampenelektrode E1 bzw. E2 verbunden. Dann sind die Lampendrossel L1, der Koppelkondensator C1 und die Entladungsstrecke zwischen den Lampenelektroden E1, E2 in Reihe geschaltet. Die Transildiode D ist parallel zum Wechselspannungsausgang j10, j11 angeordnet.

Die in Figur 1 abgebildete Schaltungsanordnung besitzt ferner eine Zündvorrichtung Z, die eine Hochspannungsquelle und einen Hochvolt-Gleichspannungsausgang j14, j15 aufweist. Der Hochvolt-Gleichspannungsausgang j14, j15 ist über einen Ladewiderstand R1 an die aus der Lampendrossel L1 und dem Koppelkondensator C1 bestehende Serienschaltung L1, C1 angeschlossen. Dazu ist, gemäß Figur 1, der positive Anschluß j14 des Hochvolt-Gleichspannungsausgangs mit dem Anschluß j10 des Wechselspannungsausgangs des Spannungswandlers W, mit der Lampendrossel L1 und mit der Transildiode D verbunden. Der negative Anschluß j15 des Hochvolt-Gleichspannungsausgangs ist über den Ladewiderstand R1 mit dem Koppelkondensators C1 und mit dem Lampenanschluß j12 verbunden. Der zweite Lampenanschluß j13 ist mit dem Anschluß j11 des Wechselspannungsausgangs und mit der Transildiode verbunden. Der Koppelkondensator besitzt eine Kapazität von 1,1 nF und die Induktivit der Lampendrossel beträgt 45 µH.

Der Spannungswandler W erzeugt aus der an seinem Spannungseingang anliegenden Niedervoltgleichspannung von beispielsweise 12 V oder 24 V oder auch 42 V eine hochfrequente Wechselspannung mit einer Amplitude von ungefähr 500 V und einer Frequenz oberhalb von 500 kHz und stellt diese an seinem Wechselspannungsausgang j10, j11 zum Betrieb der Hochdruckentladungslampe LP bereit. Diese Wechselspannung reicht allerdings nicht aus, um die Gasentladung in der Hochdruckentladungslampe LP zu zünden. Der an den Wechselspannungsausgang j10, j11 des Spannungswandlers W angeschlossene Lastkreis ist daher zunächst zwischen den beiden Lampenelektroden E1, E2 unterbrochen. Die Zündvorrichtung Z generiert an ihrem Hochvolt-Gleichspannungsausgang j 14, j15 eine zum Zünden der Gasentladung in der Hochdruckentladungslampe LP ausreichende Gleichspannung von bis zu 25 kV. Der Koppelkondensator C1 wird über den Ladewiderstand R1 und über die Lampendrossel L1 auf die von der Zündvorrichtung Z generierte Hochvolt-Gleichspannung aufgeladen. Er dient während der Zündphase als Hochspannungsquelle für den Lastkreis und insbesondere für die Hochdruckentladungslampe LP. Nach erfolgter Zündung der Gasentladung in der Hochdruckentladungslampe LP wird die Entladungsstrecke zwischen den beiden Lampenelektroden E1, E2 elektrisch leitfähig. Der Koppelkondensator C1 entlädt sich über die nun leitfähige Entladungsstrecke der Hochdruckentladungslampe LP und trägt dadurch zur Ausbildung und zur Stabilisierung eines Entladungsbogens zwischen den Lampenelektroden E1, E2 sowie zur Verkürzung der Anlaufphase der Hochdruckentladungslampe LP bei. Außerdem ist nach erfolgter Zündung der Gasentladung der Lastkreis nicht länger unterbrochen, so daß nun die vom Spannungswandler W erzeugte hochfrequente Wechselspannung einen hochfrequenten Wechselstrom über die Entladungsstrecke E1-E2 der Hochdruckentladungslampe LP fließen läßt. Die Transildiode D dient als Überspannungsschutz für den Spannungswandler W. Überschreitet der Spannungsabfall an dem Koppelkondensator C1 einen kritischen, von der Transildiode D bestimmten Schwellenwert, so wird die Transildiode D leitfähig und der Koppelkondensator C1 entlädt sich vornehmlich über die Transildiode D anstatt über die Entladungsstrecke E1-E2 der Hochdruckentladungslampe LP.

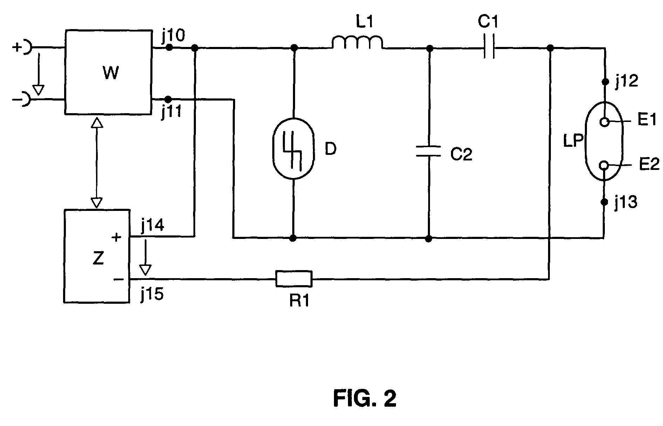

Die Figur 2 zeigt ein Blockschaltbild der erfindungsgemäßen Schaltungsanordnung mit einem als Serienresonanzkreis ausgebildeten Lastkreis. Diese Schaltungsanordnung unterscheidet sich von der in Figur 1 abgebildeten Schaltungsanordnung nur durch einen zusätzlichen Resonanzkondensator C2, der mit der Lampendrossel L1 einen Serienresonanzkreis bildet und der parallel zu der Serienschaltung bestehend aus dem Koppelkondensator C1 und der Hochdruckentladungslampe LP geschaltet ist. Die Kapazität des Resonanzkondensators C2 beträgt 80 pF. Aufgrund des zusätzlichen Resonanzkondensators C2 unterscheidet sich das Betriebsverfahren der Hochdruckentladungslampe LP an der Schaltungsanordnung gemäß der Figur 2 geringfügig von dem Betriebsverfahren der Hochdruckentladungslampe LP an der Schaltungsanordnung gemäß der Figur 1. Sobald der Spannungswandler W an seinem Wechselspannungsausgang j10, j11 eine hochfrequente Wechselspannung bereitstellt, fließt durch den als Serienresonanzkreis ausgebildeten Lastkreis, das heißt, über die Lampendrossel L1 und den Resonanzkondensator C2 ein hochfrequenter Wechselstrom. Zum Zünden der Gasentladung in der Hochdruckentladungslampe LP erzeugt die Zündvorrichtung Z an ihrem Gleichspannungsausgang j14, 15 eine Hochvolt-Gleichspannung und lädt den Koppelkondensator C1 über den Ladewiderstand R1 auf eine Hochvolt-Gleichspannung von bis zu 25 kV auf. Während der Zündphase dienen sowohl der Koppelkondensator C1 als auch der Resonanzkondensator C2 der Hochdruckentladungslampe LP als Spannungsquelle. An der Hochdrukkentladungslampe LP überlagern sich während der Zündphase die Hochvolt-Gleichspannung des Koppelkondensators C1 und die hochfrequente Wechselspannung des Resonanzkondensators C2 additiv. Während der Zündphase und während der Anlaufphase der Hochdruckentladungslampe LP wird der Spannungswandler W vorzugsweise derart betrieben, daß er eine hochfrequente Wechselspannung generieft, deren Frequenz nahe bei der Resonanzfrequenz des Serienresonanzkreis liegt. Dadurch wird am Resonanzkondensator C2 eine resonanzüberhöhte hochfrequente Wechselspannung erzeugt, die sowohl die Ausbildung und Stabilisierung eines Entladungsbogens in der Hochdruckentladungslampe LP verbessert als auch die Anlaufphase der Hochdruckentladungslampe LP - das ist die Betriebsphase unmittelbar nach erfolgter Zündung der Gasentladung, während der die ionisierbaren, zur Lichtemission beitragenden Füllungskomponenten der Hochdruckentladungslampe verdampfen - verkürzt. Nach erfolgter Zündung der Gasentladung in der Hochdrukkentladungslampe LP wird der Koppelkondensator C1 über die nun leitfähige Entladungsstrecke E1-E2 der Lampe entladen. Am Ende der Anlaufphase der Hochdrukkentladungslampe LP, das heißt, wenn alle Füllungskomponenten der Lampe LP ihren Gleichgewichtspartialdruck erreicht haben, wird der Spannungswandler W derart angesteuert, daß er an seinem Wechselspannungsausgang j10, j11 eine hochfrequente Wechselspannung generiert, deren Frequenz einen genügenden Abstand zur Resonanzfrequenz des Serienresonanzkreises besitzt, so daß an der Lampendrossel L1 und am Resonanzkondensator C2 keine Resonanzüberhöhung mehr auftritt. Die Transildiode D dient auch hier zum Schutz des Spannungswandlers W vor einer Spannungsüberlastung durch die am Koppelkondensators C1 oder am Resonanzkondensator C2 während der Zündphase anliegenden Spannungen.

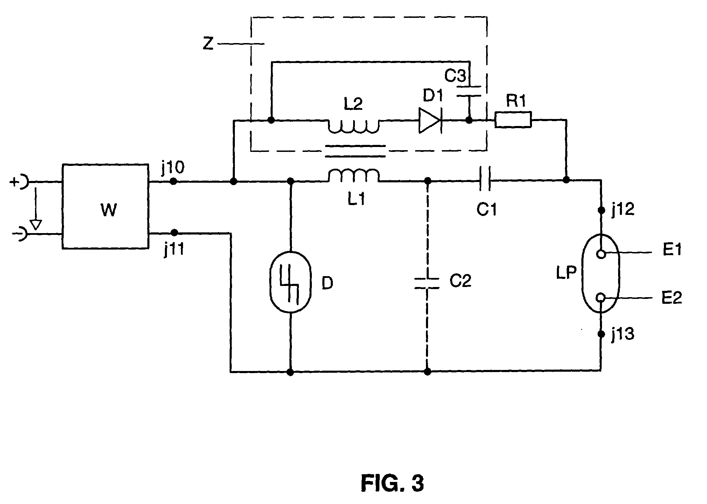

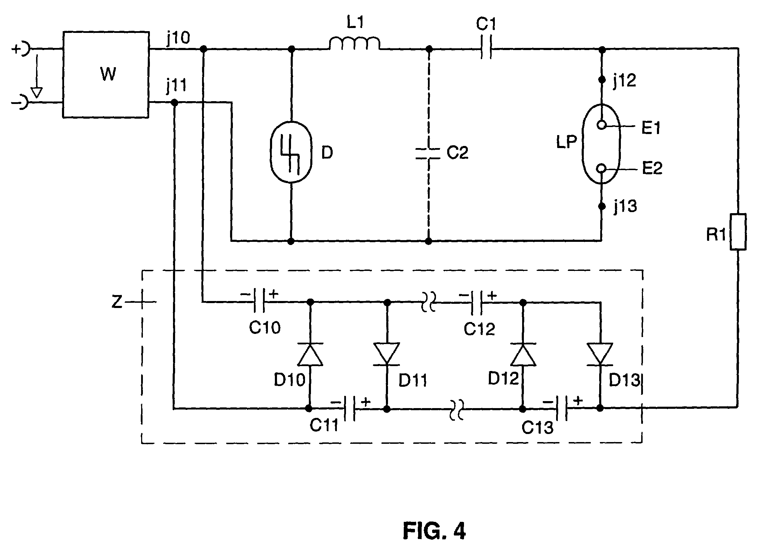

In den Figuren 3 und 4 sind zwei unterschiedliche Ausführungen der Zündvorrichtung Z abgebildet, die für beide der in den Figuren 1 und 2 gezeigten Ausführungsbeispiele der erfindungsgemäßen Schaltungsanordnung, das heißt für einen Lastkreis ohne und mit Resonanzkondensator C2, verwendet werden können. Daher ist in den Figuren 3 und 4 der Resonanzkondensator C2 jeweils gestrichelt dargestellt. Die Zündvorrichtung Z gemäß Figur 3 besteht aus einer induktiv an die Lampendrossel L1 gekoppelten Sekundärwicklung L2, eine in Serie zur Sekundärwicklung L2 geschalteten Gleichrichterdiode D1 und einem parallel zur Serienschaltung aus Sekundärwicklung L2 und Gleichrichterdiode D1 angeordneten Kondensator C3. Die Sekundärwicklung L2 dient als Hochspannungsquelle für die Zündvorrichtung Z. Beim Einschalten des Spannungswandlers W wird in der Sekundärwicklung L2 eine Hochspannung induziert und durch die Diode D1 gleichgerichtet. Diese gleichgerichtete Hochspannung wird dem Koppelkondensator C1 über den Widerstand R1, wie bereits oben erläutert, zugeführt.

In Figur 4 ist die Zündvorrichtung Z als Kaskadenschaltung zur Spannungsvervielfachung der vom Spannungswandler W an seinem Wechselspannungsausgang j10, j11 bereitgestellten Wechselspannung ausgeführt. Die Kaskadenschaltung besitzt beispielsweise 20 Stufen, von denen in Figur 4 nur die erste und die letzte gezeigt sind, um die 500 V-Wechselspannung des Spannungswandlers W in eine 20 kV Gleichspannung umzuwandeln. Der Spannungseingang der Kaskadenschaltung ist mit dem Wechselspannungsausgang j10, j11 des Spannungswandlers W verbunden. Der Hochspannungsausgang der Kaskadenschaltung ist über den Ladewiderstand R1 mit dem Koppelkondensator C1 und mit dem Lampenanschluß j12 verbunden. Aufbau und Funktion einer Kaskadenschaltung zur Spannungsvervielfachung sind beispielsweise auf Seite 220 des Buchs 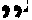 Bauelemente der Elektronik und ihre Grundschaltungen" von H. Höger, F. Kähler und G. Weigt, erschienen im Verlag H. Stam GmbH (7. Auflage) beschrieben.

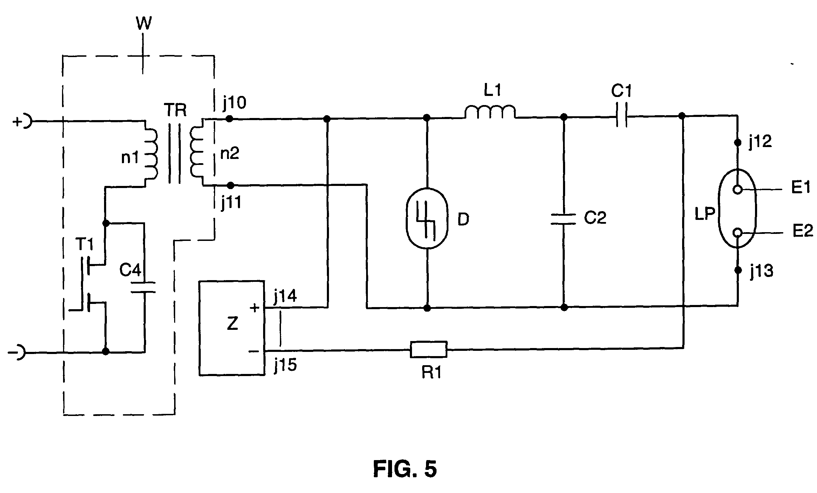

In Figur 5 ist der Spannungswandler W des zweiten Ausführungsbeispiels (Figur 2) als resonant arbeitender Eintaktwandler ausgeführt. Der Eintaktwandler W weist einen Feldeffekttransistor T1, einen Transformator TR mit einer Primärwicklung n1 und einer Sekundärwicklung n2 und eine Ansteuerungsvorrichtung (nicht abgebildet) für den Feldeffekttransistor T1 sowie einen Kondensator C4 auf. Die Primärwicklung n1 und die Drain-Source-Strecke des Feldeffekttransistors T1 sind in Serie geschaltet. Die Sekundärwicklung n2 des Transformators TR ist mit den Anschlüssen j10, j11 des Wechselspannungsausgangs des Eintaktwandlers W verbunden. Sie dient dem Lastkreis als hochfrequente Wechselspannungsquelle. Die Gate-Elektrode des Feldeffekttransistors T1 ist mit der Ansteuerungsvorrichtung verbunden. Der Kondensator C4 ist parallel zur Drain-Source-Strecke des Feldeffekttransistors T1 angeordnet. Der Schalttakt des Feldeffekttransistors T1 bestimmt die Frequenz der in der Sekundärwicklung generierten Induktionsspannung. Während der Zündphase und während der Anlaufphase der Hochdruckentladungslampe LP wird der Feldeffekttransistor T1 mittels der Ansteuerungsvorrichtung derart angesteuert, daß die Frequenz der an der Sekundärwicklung n2 generierten Induktionsspannung in der Nähe der Resonanzfrequenz des Serienresonanzkreises C2, L1 liegt. Dadurch tritt an den Resonanzkreisbauteilen L1 und C2 während der vorgenannten Betriebsphasen eine resonant überhöhte hochfrequente Wechselspannung auf. Die Resonanzfrequenz des Serienresonanzkreises L1, C2 beträgt gemäß der obengenannten Dimensionierung dieser Bauteile ungefähr 2,653 MHz. Nach Beendigung der Zündphase und der Anlaufphase wird die Hochdruckentladungslampe LP mit einer hochfrequenten Wechselspannung von ungefähr 1 MHz betrieben. Um das Auftreten von akustischen Resonanzen in dem Entladungsplasma zu vermeiden, wird diese Betriebsfrequenz mit einer Frequenz von 100 kHz moduliert, so daß die Frequenz der Lampenspannung 0,9 MHz bis 1,1 MHz beträgt. Die Betriebsspannung der Hochdruckentladungslampe LP beträgt nach Beendigung der Anlaufphase ca. 80 V.

Bei der Hochdruckentladungslampe LP handelt es sich um eine Halogenmetalldampfhochdruckentladungslampe mit einer elektrischen Leistungsaufnahme von ungefähr 35 Watt, die in einem Kraftfahrzeugscheinwerfer an der Bordnetzspannung des Kraftfahrzeugs betrieben wird. In den Figuren 1 bis 5 wurden gleiche Bauteile mit denselben Bezugszeichen versehen. Die Tabelle 1 gibt eine geeignete Dimensionierung der Schaltungsbauteile an.

Die Erfindung beschränkt sich nicht auf die oben näher erläuterten Ausführungsbeispiele. Beispielsweise kann anstatt eines Eintaktwandlers (Figur 5) auch ein Gegentaktwandler, zum Beispiel ein Push-Pull-Wechselrichter, verwendet werden, dessen Wechselspannungsausgang von der Sekundärwicklung eines Transformators gebildet wird.

## Patentansprüche

1. Schaltungsanordnung zum Betrieb mindestens einer Hochdruckentladungslampe mit einer hochfrequenten Wechselspannung, wobei die Schaltungsanordnung folgende Merkmale aufweist:
- einen Spannungswandler (W) mit einem Wechselspannungsausgang (j10, j11),
- einen an den Wechselspannungsausgang (j10, j11) angeschlossenen Lastkreis, der zumindest eine Lampendrossel (L1), einen Koppelkondensator (C1) und Anschlüsse für mindestens eine Hochdruckentladungslampe (LP) aufweist,
- eine Zündvorrichtung (Z) mit einer Hochspannungsquelle und einem Hochvolt-Gleichspannungsausgang (j14, j15) zum Zünden einer Gasentladung in der mindestens einen Hochdruckentladungslampe (LP),
dadurch gekennzeichnet, daß der Koppelkondensator (C1) über einen Ladewiderstand (R1) mit dem Hochvolt-Gleichspannungsausgang (j14, j15) verbunden ist.

2. Schaltungsanordnung nach Anspruch 1, dadurch gekennzeichnet, daß die Schaltungsanordnung eine Schaltungsanordnung zum Hochfrequenzbetrieb der mindestens einen Hochdruckentladungslampe (LP) mit Wechselspannungsfrequenzen oberhalb von 500 KHz ist.

3. Schaltungsanordnung nach Anspruch 1, dadurch gekennzeichnet, daß die Hochspannungsquelle als eine Kaskadenschaltung zur Spannungsvervielfachung ausgebildet ist.

4. Schaltungsanordnung nach Anspruch 1, dadurch gekennzeichnet, daß die Hochspannungsquelle als induktiv an die Lampendrossel (L1) gekoppelte Sekundärwicklung (L2) ausgebildet ist.

5. Schaltungsanordnung nach Anspruch 4, dadurch gekennzeichnet, daß die Zündvorrichtung (Z) eine in Serie zur Sekundärwicklung (L2) geschaltete Gleichrichterdiode (D1) und einen parallel zu der aus der Sekundärwicklung (L2) und der Gleichrichterdiode (D1) bestehenden Serienschaltung angeordneten Kondensator (C3) aufweist.

6. Schaltungsanordnung nach Anspruch 1, dadurch gekennzeichnet, daß der Lastkreis zusätzlich zumindest einen Resonanzkondensator (C2) besitzt, der mit der Lampendrossel (L1) einen Serienresonanzkreis bildet.

7. Schaltungsanordnung nach Anspruch 6, dadurch gekennzeichnet, daß der Resonanzkondensator (C2) parallel zu der aus dem Koppelkondensator (C1) und der mindestens einen Hochdruckentladungslampe (LP) bestehenden Serienschaltung geschaltet ist.

8. Schaltungsanordnung nach Anspruch 1, dadurch gekennzeichnet, daß parallel zum Wechselspannungsausgang (j10, j11) des Spannungswandlers (W) zumindest ein spannungsbegrenzendes Bauteil (D) geschaltet ist.

9. Schaltungsanordnung nach Anspruch 8, dadurch gekennzeichnet, daß das spannungsbegrenzende Bauteil eine bidirektionale Diode (D) oder ein Varistor ist.

10. Schaltungsanordnung nach Anspruch 1, dadurch gekennzeichnet, daß der Spannungswandler (W) als Eintaktwandler ausgebildet ist.

11. Schaltungsanordnung nach Anspruch 1, dadurch gekennzeichnet, daß der Spannungswandler (W) als Gegentaktwandler ausgebildet ist.

12. Verfahren zum Betrieb einer Hochdruckentladungslampe an einer Schaltungsanordnung gemäß Anspruch 1, wobei
- die Zündvorrichtung (Z) während der Zündphase eine Hochspannung zum Zünden einer Gasentladung in der mindestens einen Hochdruckentladungslampe (LP) erzeugt,
- der Spannungswandler (W) an seinem Wechselspannungsausgang (j10, j11) eine zur Aufrechterhaltung der Gasentladung in der Hochdruckentladungslampe (LP) ausreichende hochfrequente Wechselspannung generiert,
dadurch gekennzeichnet, daß die von der Zündvorrichtung (Z) erzeugte Hochspannung dem Koppelkondensator (C1) zugeführt wird und der Koppelkondensator (C1) während der Zündphase als Spannungsquelle für die mindestens eine Hochdruckentladungslampe (LP) dient.

13. Verfahren nach Anspruch 12, dadurch gekennzeichnet, daß der Spannungswandler (W) eine hochfrequente Wechselspannung von mindestens 500 kHz erzeugt.

14. Verfahren zum Betrieb einer Hochdruckentladungslampe nach Anspruch 12 an einer Schaltungsanordnung gemäß Anspruch 6, dadurch gekennzeichnet, daß der Spannungswandler (W) zumindest während der Zündphase der Hochdruckentladungslampe (LP) an seinem Wechselspannungsausgang (j10, j11) eine derartige hochfrequente Wechselspannung erzeugt, daß am Resonanzkondensator (C2) ein resonanzüberhöhter Spannungsabfall generiert wird, wobei der mindestens einen Hochdruckentladungslampe (LP) zum Zünden einer Gasentladung sowohl die resonanzüberhöhte Spannung des Resonanzkondensators (C2) als auch die Hochvolt-Gleichspannung des Koppel-kondensators (C1) zugeführt werden.
